# EUROPÄISCHE PATENTSCHRIFT

(11) **EP 2 910 100 B1**
(45) Veröffentlichungstag und Bekanntmachung des Hinweises auf die Patenterteilung: **09.10.2019**
(21) Anmeldenummer: 15155738.6
(22) Anmeldetag: 19.02.2015
(51) Int. Cl.: A01C 21/00

(54) **EINBRINGVORRICHTUNG FÜR MEHRSCHICHTDÜNGUNG**
DELIVERY SYSTEM FOR MULTILAYER FERTILIZER APPLICATION
DISPOSITIF MULTICOUCHE DE DISTRIBUTION DE FERTILISANT

(30) Priorität: 20.02.2014 DE 202014001511 U
(43) Veröffentlichungstag der Anmeldung: 26.08.2015
(73) Patentinhaber: Hugo Vogelsang Maschinenbau GmbH, 49632 Essen (DE)
(72) Erfinder: Overmöhle, Gerd-Felix, 49610 Quakenbrück (DE)
(74) Vertreter: Eisenführ Speiser

(56) Entgegenhaltungen:
- FR-A5- 2 045 320
- NL-C- 1 037 498
- US-A1- 2012 032 003

## Beschreibung

Die Erfindung betrifft eine Vorrichtung zur Einbringung eines feststoffhaltigen Gülledepots in eine Erdschicht.

Vorrichtungen dieser Art werden in der landwirtschaftlichen Produktion dazu eingesetzt, um feststoffhaltige Gülle auf einer Anbaufläche für Nutzpflanzen auszubringen. Es ist grundsätzlich bekannt, solche feststoffhaltige Gülle durch eine Verteilereinrichtung oberhalb der Bodenoberfläche zu versprühen und hierdurch die Anbaubodenfläche mit der feststoffhaltigen Gülle zu bedecken. Diese feststoffhaltige Gülle sickert dann teilweise - hinsichtlich ihrer flüssigen Bestandteile - in den Boden ein und verbleibt teilweise als oberste Schicht auf dem Boden. Während mit diesen Verfahren und Vorrichtungen zur Durchführung dieses Verfahrens eine insoweit für den Anbau von Nutzpflanzen wirtschaftlich durchführbare Verteilung der feststoffhaltigen Gülle auf der Anbaufläche erzielt werden kann, insbesondere weil die feststoffhaltige Gülle hierbei aus einem Tank über eine verhältnismäße große Öffnung abgegeben und dann über eine Schleuderscheibe, einen Zentrifugalverteiler oder der Gleichen mit geringer Gefahr von Verstopfungen ausgebracht werden kann und durch die oberflächige Ausbringung und das nachfolgende Versickern eine insoweit günstige Anordnung der feststoffhaltigen Gülle im oberflächennahen Bereich erzielt wird. Nachteilig an dieser Art der Ausbringung ist allerdings eine erhebliche Geruchs- und Ammoniakemission. Diese Art der Geruchsemision wird je nach nationalen oder übernationalen Bestimmungen und Vorgaben unterschiedlich reguliert. Diese Regularien reichen von Vorgaben hinsichtlich der Emissionsgrenzen bis zu Vorgaben, welche dieser Art der Gülleausbringung nur in Verbindung mit einer nachfolgenden Bodenbearbeitung zur Einarbeitung der Gülleschicht in den Boden durch eine nachfolgende, das Erdreich wendende Bearbeitung innerhalb eines vorgegebenen maximalen Zeitabstands nach Ausbringung der Gülle erlauben.

Grundsätzlich kann durch eine Ausbringung der Gülle durch Verteilen oberhalb der Anbaufläche und nachfolgende Einarbeitung eine geruchs- und ammoniakemissionsarme Einbringung der feststoffhaltigen Gülle in das Erdreich erzielt werden. Nachteilig an dieser Vorgehensweise ist allerdings, dass hierzu eine mindestens zweimalige Bearbeitung mit entsprechend zweimaliger Befahrung der Anbaufläche notwendig ist, wodurch sowohl zusätzliche Arbeitszeit als auch zusätzlicher Treibstoffverbrauch und Materialverschleiß verursacht wird. Zudem hat sich als nachteilig erwiesen, dass die Einarbeitung der Gülle im zweiten Arbeitsschritt aufgrund von deren hoher chemischer Aggressivität in erheblicher Weise Korrosion an den Bodenbearbeitungsgeräten verursacht.

Neben diesen etablierten Ausbringungsverfahren für feststoffhaltige Gülle ist es inzwischen weiterhin bekannt, feststoffhaltige Gülle in eine Bodenanbaufläche einzubringen, indem diese nicht oberhalb der Oberfläche versprüht wird, sondern direkt in einer vorbestimmten Tiefe in den Boden eingebracht wird. Bei dieser Vorgehensweise wird die Austragsöffnung an einem unteren Ende eines Bodenzinkens angeordnet, der in den Boden auf eine vorbestimmte Tiefe eingesetzt wird. Typischerweise erfolgt bei dieser Vorgehensweise die Ausbringung über mehrere solche Öffnungen an entsprechend mehreren Zinken, die seitlich in Bezug auf eine Fahrrichtung zueinander angeordnet sind und im Zuge der Bodenbearbeitung in Fahrrichtung durch den Boden gezogen werden. Auf diese Weise entstehen mehrere parallel verlaufende und seitliche beabstandete Gülledepots in Form von mehreren Strängen aus feststoffhaltiger Gülle, die in einer bestimmten Tiefe des Bodens platziert sind.

Vorteilhaft an dieser Art der Einbringung der Gülle ist es, dass die Einbringungsweise nahezu emissionslos erfolgt und daher eine nachfolgende Bodenbearbeitung aus Emissionsschutzgründen nicht erforderlich ist. Nachteilig an dieser Art der Einbringung ist allerdings die lokal sehr begrenzte Anordnung der feststoffhaltigen Gülle, welche hinsichtlich der Düngewirkung der Gülle eine ungünstige Verteilung in der Bodenfläche zur Folge hat und dadurch das Wachstum der Nutzpflanzen nicht in idealer Weise unterstützt. Insbesondere wird durch diese Einbringungsweise ein Großteil der Bodenschichtanteile nährstoffarm belassen, wohingegen ein lokal sehr begrenzter Anteil des Bodens mit einem überkonzentrierten Nährstoffangebot versehen wird. Dies ist zwar in einigen, nicht jedoch in allen Anwendungsfällen so gewünscht. Aus diesem Grund wird teilweise zu Zwecken der günstigeren Nährstoffverteilung aus der feststoffhaltigen Gülle eine nachfolgende Bodenüberarbeitung dennoch durchgeführt, was allerdings die zuvor bereits erläuterten Nachteile wiederum mit sich bringt.

Aus NL 1037498 C ist eine Vorrichtung zur Einbringung einer fließfähigen Substanz in den Boden vorbekannt. Die Substanz wird aus einem Verteiler über mehrere Schläuche an Austragsöffnungen verteilt. Hierbei ist eine Austragsöffnung ausgebildet, um die Flüssigkeit in eine zuvor erzeugte Furche einzubringen, eine andere Ausbringöffnung ist ausgebildet, um die Flüssigkeit links und rechts von dieser Furche oberflächlich aufzutragen.

Aus FR 2045320 A5 ist eine Vorrichtung zum Einbringen von Düngemitteln in den Boden vorbekannt. Hierbei wird durch erste Ausbringöffnungen das Düngemittel in einer tiefen Position in den Boden eingebracht und durch eine zweite Ausbringöffnung das Düngemittel in einer höheren Position in den Boden eingebracht.

Ein weiteres Problem, welches mit der unmittelbaren Einbringung der Gülle über mehrere in den Boden eingesetzt Ausbringöffnungen zusammenhängt liegt in der spezifischen Zusammensetzung der feststoffhaltigen Gülle. Während es vergleichsweise unproblematisch ist, eine solche feststoffhaltige Gülle über eine große Austragsöffnung aus einem Tank heraus zu fördern und dann durch eine Schleuderscheibe oder einen Zentrifugalverteiler oberhalb der Oberfläche zu versprühen ist die Ausbringung durch mehrere kleine Öffnungen problematisch hinsichtlich der Verstopfung dieser Öffnungen. Da eine intensive Aufbereitung, Homogensierung und der Gleichen der feststoffhaltigen Gülle aus wirtschaftlichen Gründen regelmäßig nicht durchgeführt werden kann, muss bei der Ausbringung damit umgegangen werden, dass sich in der feststoffhaltigen Gülle Feststoff unterschiedlicher Größe und Zusammensetzung befinden können. Dies reicht von feinen Faseranteilen bis zu größeren Faserklumpen, Zweigen oder Aststücken bis hin zu mineralischen Feststoffen unterschiedlicher Größe. Regelmäßig problematisch ist daher die Ausbringung solcher feststoffhaltigen Gülle aus einem Tank, wenn im Zuge der Ausbringung eine Verteilung der feststoffhaltigen Gülle aus einem großen Durchtrittsquerschnitt auf mehrere kleine Durchtrittsquerschnitte erfolgen soll. Wissenschaftliche Untersuchungen haben zwar ergeben, dass eine feinere Verteilung der feststoffhaltigen Gülle in Gestalt von einzelnen Strängen, die voneinander seitlich beabstandet sind, eine wirtschaftlich vorteilhafte Einbringung und Nährstoffverteilung in der Anbaubodenfläche erzielt. In praktischer Hinsicht ist eine solche Einbringung jedoch mit feststoffhaltiger Gülle häufig nicht zuverlässig erzielbar, weil die Unterverteilung regelmäßig zu Verstopfungen führt, was einen nicht zu vertretenden Wartungsaufwand und zudem - aufgrund der tatsächlich fehlenden Feststellbarkeit solcher lokaler Verstopfungen im laufenden Austragsverfahren - zu einer unzuverlässigen Austragsweise führt.

Der Erfindung liegt die Aufgabe zugrunde, eine Vorrichtung und ein Verfahren zur Ausbringungen von feststoffhaltiger Gülle bereitzustellen, welches eine emissionsarme Einbringung der feststoffhaltigen Gülle mit einer günstigeren Nährstoffverteilung als die vorbekannten Austragsverfahren erzielt, ohne hierbei die Wirtschaftlichkeit des Austragsverfahrens zu verschlechtern.

Diese Aufgabe wird durch eine Vorrichtung mit den Merkmalen des Anspruchs 1 gelöst.

Mit der erfindungsgemäßen Einbringvorrichtung wird des ermöglicht, feststoffhaltige Gülle wirtschaftlich und zuverlässig in zumindest zwei vertikal beabstandeten Höhen in eine Anbaubodenfläche einzubringen. Dies wird erreicht, indem die feststoffhaltige Gülle in einer Verteilervorrichtung auf einen ersten Satz und einen zweiten Satz von jeweils mehreren Ausgangsöffnungen aus dem Verteiierinnenraum heraus verteilt wird und jede dieser Ausgangsöffnungen mit einer entsprechenden Verbindungsleitung zur Weiterleitung der feststoffhaltigen Gülle fluidleitend verbunden ist. Der erste Satz von Ausgangsöffnungen ist mit entsprechend mehreren ersten Verbindungsleitungen mit einer Mehrzahl von ersten Ausbringöffnungen fluidleitend verbunden. Über diesen ersten Satz von Ausbringöffnungen wird damit unmittelbar aus dem Verteilerinnenraum ohne eine weitere Verzweigung oder Querschnittsverengung die feststoffhaltige Gülle in einer ersten, vorbestimmten Tiefe des Boden platziert und kann als Mehrzahl von parallelen Strängen in dieser Tiefe ausgebracht werden. Mittels des zweiten Satzes von Ausgangsöffnungen, Verbindungsleitungen und zweiten Ausbringöffnungen wird die feststoffhaltige Gülle wiederum direkt aus dem Verteilerinnenraum ohne die Notwendigkeit einer Verzweigung oder Querschnittsverengung in einer zweiten vorbestimmten Tiefe in den Boden eingebracht, die vertikal beabstandet zu der ersten Tiefe ist. Auch hier wird die feststoffhaltige Gülle als Mehrzahl von parallel verlaufenden, seitlich beabstandeten Strängen in den Boden eingebracht und kann beispielsweise in einer zweiten Tiefe eingebracht werden, die oberhalb der ersten Tiefe liegt.

Die Erfindung erreicht damit eine Platzierung von einer Mehrzahl von jeweils zwei vertikal zueinander beabstandeten Strängen der feststoffhaltigen Gülle und vermeidet damit die ungünstige, hohe lokale Konzentration, die mit der vorbekannten Austragsweise von feststoffhaltiger Gülle einherging sowie die Notwendigkeit einer nachträglichen, zweiten Flächenbearbeitung zur Erzielung einer günstigen und emissionsarmen Nährstoffverteilung in der Bodenfläche. Diese günstige Verteilung wird erreicht, ohne das hierzu Verzweigungen oder Querschnittsreduktionen in der Durchleitung der feststoffhaltigen Gülle aus der Verteilervorrichtung bis zu den Ausbringöffnungen notwendig wären und ist daher wartungsarm und unempfindlich gegenüber Verstopfungen.

Erfindungsgemäß ist vorgesehen, dass die ersten Ausgangsöffnungen eine größere Querschnittsflächengröße haben als die zweiten Ausgangsöffnungen. Durch dieses Merkmal wird ein Unterschied in der Querschnittsflächengröße zwischen den ersten und den zweiten Ausgangsöffnungen an der Verteilervorrichtung vorgesehen. Als Querschnittsflächengröße ist hierbei die Größe des Querschnitts zu verstehen, durch den die feststoffhaltige Gülle strömt, wenn sie durch die Ausgangsöffnung fließt. Die Querschnittsflächengröße der Ausgangsöffnung bestimmt damit durch ihre in Abhängigkeit der Querschnittsflächengröße höhere oder niedrigere Drosselwirkung die Größe des Volumenstroms durch die Ausgangsöffnung. Grundsätzlich ist zu verstehen, dass ausgehend von der Ausgangsöffnung auch die Querschnittsflächengröße aller nachfolgenden fluidleitenden Bauteile wie dem Anschlussstutzen für die Verbindungsleitung, der Verbindungsleitung und der Ausbringöffnung übereinstimmend zu der Querschnittsflächengröße der Ausgangsöffnung ausgeführt sein sollte. Grundsätzlich können aber auch hinter der Ausgangsöffnung größere Querschnittsflächen in einem oder mehrerer dieser Bauteile vorgesehen sein als in der Ausgangsöffnung. Bevorzugt ist die Querschnittsflächengröße nachfolgender Bauteile jedoch nicht kleiner als die Querschnittsflächengröße der Ausgangsöffnung.

Durch die Bereitstellung von unterschiedlichen Querschnittsflächengrößen bei der ersten Ausgangsöffnung gegenüber der zweiten Ausgangsöffnung wird es möglich, eine unterschiedliche Menge der feststoffhaltigen Gülle durch die erste Ausbringöffnung gegenüber der zweiten Ausbringöffnung auszutragen. Dies ist insbesondere vorteilhaft, um beispielsweise einen dickeren Strang der feststoffhaltigen Gülle über die ersten Ausgangsöffnungen in eine tiefere Ebene der Bodenschicht einzubringen und einen kleineren Strang der feststoffhaltigen Gülle in eine oberflächennahe Ebene der Bodenschicht einzubringen. Diese Aufteilung bewirkt eine rasche Bereitstellung von Nährstoffen für den eingesetzten Pflänzling oder Pflanzsamen und eine Bereitstellung einer größeren Menge von Nährstoffe nach einem Zeitraum, zu dem der Pflänzling mit seinen Wurzeln bereits in die Tiefe gewachsen ist und das tieferliegende Nährstoffdepot erreicht.

Die erfindungsgemäße Vorrichtung kann weiter fortgebildet werden durch einen dritten Satz von mehreren dritten Ausgangsöffnungen zum Ableiten der feststoffhaltigen Gülle aus dem Verteilerraum und einen dritten Satz von mehreren dritten Verbindungsleitungen, wobei sich jede dritte Verbindungsleitung von einem Leitungsanfang zu einem Leitungsende erstreckt, an ihrem Leitungsanfang mit einer dritten Ausgangsöffnung verbunden ist und an ihrem Leitungsende mit einer ersten Ausbringöffnung aus dem Satz der ersten Ausbringöffnungen verbunden ist. Bei dieser Ausführungsform sind insgesamt drei Sätze von Ausgangsöffnungen aus dem Verteilerinnenraum vorgesehen. Dabei sind die Ausgangsöffnungen des zweiten Satzes mit entsprechend zweiten Verbindungsleitungen mit dem Satz von zweiten Ausbringöffnungen in einer 1:1 Zuordnung verbunden, sodass hier jede Austrittsöffnung mit jeweils einer Ausbringöffnung direkt über eine Verbindungsleitung verbunden ist. Die Ausgangsöffnungen des ersten und dritten Satzes sind ebenfalls mit jeweils einer Verbindungsleitung eines ersten und dritten Satzes verbunden, sodass hier eine 1:1 Zuordnung jeder Ausgangsöffnung zu einer Verbindungsleitung besteht. Sowohl die sich von einer ersten Ausgangsöffnung erstreckende erste Verbindungsleitung als auch die sich von einer dritten Ausgangsöffnung erstreckende dritte Verbindungsleitung ist dann aber jeweils mit ihrem Leitungsende mit einer einzigen ersten Ausbringöffnung verbunden, sodass hier aus jeweils einer ersten und einer dritten Ausgangsöffnung eine einzige erste Ausbringöffnung mit feststoffhaltiger Gülle versorgt wird. Hierdurch kann jede erste Ausbringöffnung mit einem größeren Volumenstrom von feststoffhaltiger Gülle versorgt werden als die zweiten Ausbringöffnungen.

Eine von der Erfindung abweichende Ausführungsform sieht vor, dass die ersten, zweiten und gegebenenfalls dritten Ausgangsöffnungen eine übereinstimmende Querschnittsflächengröße haben. Bei dieser Ausführungsform sind alle Ausgangsöffnungen der Verteilervorrichtung mit einer übereinstimmenden Querschnittsflächengröße versehen. Diese Bauweise ermöglicht einerseits eine vorteilhafte Fertigungstechnik aufgrund der dann übereinstimmend ausführbaren Maße dieser Ausgangsöffnungen. Darüberhinaus wird eine universelle Einsetzbarkeit der Verteilervorrichtung eröffnet, indem aus den Ausgangsöffnungen in der erfindungsgemäßen Weise Gülledepots in unterschiedlichen Tiefen gelegt werden können, die Verteilervorrichtung aber auch dazu eingesetzt werden kann, Reihen von drei oder mehr vertikal gestaffelten Gülledepots oder eine große Anzahl von horizontal beabstandeten Gülledepots zu legen, indem die Verbindung mittels entsprechenden Verbindungsleitungen zu entsprechend mehreren Ausbringöffnungen an die Ausgangsöffnungen angeschlossen werden. Bei dieser modifizierten Verwendungsweise bleibt sichergestellt, dass jede Ausgangsöffnung mit dem gleichen Volumenstrom beaufschlagt wird. In gleicher Weise ist es möglich, mit der Verteilervorrichtung die Gülledepots in einer einzigen Ebene auszubringen, wobei dann eine entsprechend größere Bearbeitungsbreite aufgrund der dann größeren Anzahl von Ausbringöffnungen in der einzigen Ebene beziehungsweise eine kürzere Beabstandung der ausgebrachten Stränge bei gleichbleibender Bearbeitungsbreite möglich wird.

Gemäß einer weiteren bevorzugten Ausführungsform ist vorgesehen, dass die ersten und dritten Ausgangsöffnungen eine voneinander verschiedene Querschnittsflächengröße haben. Mit dieser Ausführungsform wird durch die dritten Ausgangsöffnungen ein zusätzlicher Volumenstrom zu den ersten Ausbringöffnungen bereitgestellt, der keine reine Verdoppelung des Volumenstroms gegenüber demjenigen durch die zweiten Ausbringöffnungen darstellt. Stattdessen kann der Volumenstrom mehr als doppelt so groß gewählt werden, indem die dritten Ausgangsöffnungen größer als die ersten und zweiten Ausgangsöffnungen gewählt werden oder weniger als doppelt so groß gewählt werden, indem die dritten Ausgangsöffnungen kleiner als die ersten und zweiten Ausgangsöffnungen gewählt werden.

Alternativ hierzu kann vorgesehen sein, dass die ersten und dritten Ausgangsöffnungen eine übereinstimmende Querschnittsflächengröße haben und die ersten und zweiten Ausgangsöffnungen eine nach Anspruch 1 voneinander verschiedene Querschnittsflächengröße haben. Mit dieser Ausführungsform wird es ermöglicht, dass durch zwei übereinstimmend große erste und dritte Ausgangsöffnungen die ersten Ausbringöffnungen mit feststoffhaltiger Gülle versorgt wird und die zweite Ausbringöffnung über einer zweiten Ausgangsöffnung, deren Größe von der Querschnittsflächengröße dieser ersten und dritten Ausgangsöffnung kleiner ist, versorgt wird.

Jede Ausgangsöffnung steht vorzugsweise mit jeweils einem Anschlussstutzen in Fluidverbindung, um hieran die entsprechende Verbindungsleitung zu befestigen und die feststoffhaltige Gülle aus der Ausgangsöffnung über den Anschlussstutzen in die Verbindungsleitung einzuleiten. Die Anschlussstutzen können hierbei vorzugsweise einen Durchtrittsquerschnitt haben, der die gleiche Größe aufweist wie die Durchtrittsquerschnittsfläche der jeweiligen Ausgangsöffnung. Bevorzugt kann aber auch vorgesehen sein, dass die Anschlussstutzen aller Ausgangsöffnungen übereinstimmende Anschlussmaße für die Verbindungsleitungen aufweisen, also je nach Ausführung beispielsweise einen übereinstimmenden Außendurchmesser, um hierdurch die Verwendung übereinstimmender Verbindungsleitungen für alle zwei beziehungsweise drei Sätze von Verbindungsleitungen zu ermöglichen. Dies kann gegebenenfalls auch so ausgeführt sein, dass die Anschlussstutzen übereinstimmende Innendurchmesser und damit innere Durchtrittsquerschnittsflächengrößen aufweisen, wobei diese dann bevorzugt größer oder gleich dem größten Durchtrittsquerschnitt der ersten, zweiten und dritten Ausgangsöffnungen sind.

Weiterhin ist bevorzugt vorgesehen, dass im Verteilerinnenraum eine Schneidvorrichtung angeordnet ist, die relativ beweglich zu den ersten und zweiten Ausgangsöffnungen ist. Durch die Bereitstellung einer solchen Schneidvorrichtung im Verteilerinnenraum können einerseits die Feststoffe in der Gülle zerkleinert werden, sodass die Gefahr einer Verstopfung der Öffnungen oder Leitungen in Strömungsrichtung hinter der Verteilervorrichtung reduziert beziehungsweise vermieden wird. Zudem kann durch eine solche Schneidvorrichtung eine Umwälzung oder Durchmischung innerhalb des Verteilerinnenraums zusätzlich bewirkt werden, indem die Schneidvorrichtung als Schneid-/Mischvorrichtung ausgebildet ist. Durch eine solche Umwälzung und Durchmischung innerhalb des Verteilerinnenraums können sich bildende Verstopfungen wieder aufgelöst werden und somit der Durchfluss durch alle Öffnungen und Leitungen aufrechterhalten werden.

Die Schneidvorrichtung kann weiterhin so fortgebildet sein, dass sie einen Teil der Ausgangsöffnungen abdeckt und von der Zufuhr von feststoffhaltiger Gülle dadurch abtrennt und einen anderen Teil der Ausgangsöffnungen mit der Zufuhr von feststoffhaltiger Gülle aus dem Verteilerinnenraum verbindet und solcher Art bewegt wird, dass durch die Bewegung alle Ausgangsöffnungen intermittierend abgedeckt und freigegeben werden oder zumindest ein Teil der Ausgangsöffnungen intermittierend abgedeckt und freigegeben wird und ein anderer Teil permanent freigegeben wird. Durch diese intermittierende Abdeckung und Freigabe der Ausgangsöffnungen durch die Schneidvorrichtung wird eine in günstiger Weise gegen Verstopfungen wirkende Druckpulsbeaufschlagung der Ausgangsöffnungen und aller nachfolgenden fluidleitenden Bauteile mit feststoffhaltiger Gülle erzielt, der Förderdruck aus dem Verteilerinnenraum in vorteilhafter Weise auf nur eine reduzierte Anzahl von Ausgangsöffnungen aufgegeben und hierdurch die Gefahr von Verstopfungen weiter reduziert.

Dabei ist es besonders bevorzugt, wenn die Schneidvorrichtung über den Rand von zumindest einiger, vorzugsweise allen ersten, zweiten und/oder dritten Ausgangsöffnungen streicht. Bei dieser Ausführungsform wirkt die Schneidvorrichtung in einer scherenden Schneidwirkung mit den Ausgangsöffnungen oder einem Teil der Ausgangsöffnungen des ersten, zweiten und/oder dritten Satzes zusammen. Die Ausgangsöffnungen können hierzu vollständig oder teilweise in einer Schneidplatte angeordnet sein, die beispielsweise als ebene Schneidplatte oder gebogene Schneidplatte ausgeführt sein kann. Die Kanten der Ausgangsöffnungen in dieser Platte bilden hierdurch eine Schneidkante und die Schneidvorrichtung bewegt sich relativ mit ihrer Schneidkante zu dieser Schneidkante an der Ausgangsöffnung. Hierdurch wird eine Scherwirkung gegenüber den Feststoffen, die in die Ausgangsöffnung eintreten, bewirkt und eine effiziente Zerkleinerung der Feststoffe beim Eintritt in die Ausgangsöffnungen erzielt. Dabei ist besonders bevorzugt, wenn die Schneidkante über sämtliche ersten, zweiten und gegebenenfalls dritten Ausgangsöffnungen streicht, sodass diese Scherwirkung und Zerkleinerung der Feststoffe bei allen Ausgangsöffnungen auftritt und eine Verstopfung sämtlicher Leitungen und Ausbringöffnungen hierdurch vermieden wird.

Noch weiter ist es bevorzugt, dass die Schneidvorrichtung mehrere Schneidkanten aufweist, von denen jeweils jede über zumindest eine Anzahl von ersten, zweiten und/oder gegebenenfalls dritten Öffnungen streicht. Durch eine solche Art ausgebildete Schneidvorrichtung mit mehreren Schneidkanten können alle ersten, zweiten und gegebenenfalls dritten Öffnungen oder eine Anzahl daraus mit einer höheren Frequenz von den Schneidkanten überstrichen werden, sodass eine erhöhte Schneidleistung erzielt wird. Zugleich wird der Verschleiß der Schneidkanten herabgesetzt, indem die Schneidwirkung auf mehrere Schneidkanten verteilt wird. Die Schneidkanten können hierbei gradlinig oder gekrümmt verlaufen. Die Schneidvorrichtung kann weiterhin eine Vorspanneinrichtung umfassen, mit der die Schneidkanten mit einer elastischen Vorspannkraft gegen die Schneidplatte, in der die ersten, zweiten und gegebenenfalls dritten Ausgangsöffnungen ausgebildet sind, gepresst werden und bei Verschleiß nachgestellt werden.

Noch weiter ist bevorzugt vorgesehen, dass die Schneidvorrichtung um eine Rotationsachse drehbar gelagert ist und mittels einer Antriebseinrichtung in eine Rotations- oder Schwenkbewegung versetzt wird. Durch eine solche Ausgestaltung der Schneidvorrichtung als rotierendes Schneidmesser mit einer oder mehreren Schneidkanten, die auf einer ebenen oder gewölbten Platte, beispielsweise der Innenwand einer als Rohr ausgeführten Platte, relativ zu den Ausgangsöffnungen bewegt werden, ist eine robuste Antriebsgestaltung und zugleich einfache Wartung der Schneidvorrichtung möglich. Die Antriebseinrichtung kann hierbei beispielsweise als Elektromotor oder hydraulischer Motor ausgeführt sein. Ebenso kann die Schneidvorrichtung als Antriebseinrichtung eine Kupplungswelle aufweisen, welche mit einer entsprechenden Verbindungseinrichtung mit einem externen Aktuator, beispielsweise der Nebenabtriebswelle eines Schleppers, gekoppelt werden kann.

Insbesondere ist es weiterhin bevorzugt, dass die ersten, zweiten und gegebenenfalls dritten Öffnungen in einer ebenen Schneidplatte ausgebildet sind. Die Ausführungsform der Verteilervorrichtung mit einer ebenen Schneidplatte, in der die ersten, zweiten und gegebenenfalls dritte Öffnungen ausgebildet sind, ermöglicht es, eine Schneidvorrichtung vorzusehen, deren Schneidkante oder Schneidkanten auf dieser ebenen Schneidplatte in einer rotierenden Bewegung geführt werden. Die Ausgangsöffnungen können hierbei mit entsprechend axial sich erstreckenden Anschlussstutzen in Verbindung stehen, die beispielsweise nach axial radial auswärts ausgerichtet sind, um hier in einer montagefreundlichen Weise die Verbindungsleitungen anschließen zu können. Dieser Aufbau der Verteilervorrichtung ermöglicht es, die Einblasöffnung auf einer Seite axial in den Verteilerinnenraum hineinzuführen und einen Schneidmesserrotor anzutreiben und auf der hierzu gegenüberliegenden Seite die Anschlüsse für die Verbindungsleitungen aus den ersten, zweiten und gegebenenfalls dritten Auslassöffnungen vorzusehen.

Gemäß einer weiteren bevorzugten Ausführungsform ist vorgesehen, dass sich der Durchtrittsquerschnitt eines Fluidleitungspfades ausgehend von einer oder jeder Ausgangsöffnung bis zu einer Ausbringöffnung nicht verringert. Durch diese Ausgestaltung wird zuverlässig eine Verstopfung in Folge sich festsetzender Feststoffe im Verlauf der Durchleitung der feststoffhaltigen Gülle ausgehend von der Ausgangsöffnung des ersten, zweiten und/oder dritten Satzes bis zur Ausbringöffnung vermieden. Insbesondere kann vorzugsweise der Querschnitt der Flüssigkeitsleitung ausgehend von der Ausgangsöffnung bis zur Ausbringöffnung konstant gehalten werden oder sich abschnittweise oder insgesamt erweitern. Schließlich ist gemäß einer weiteren bevorzugten Ausführungsform vorgesehen, dass die erste und zweite Ausbringöffnung an einem hohl ausgebildeten Grubberzinken angeordnet sind, der einen innenliegenden Hohlraum aufweist, in den die erste und gegebenenfalls. dritte Verbindungsleitung mündet und mit dem die zweite Ausbringöffnung in Fluidverbindung steht. Bei dieser Ausführungsform können die erste und zweite Ausbringöffnung durch Einsetzen des Grubberzinkens in die Bodenschicht auf einer bestimmten, definierten Höhe angeordnet werden. Die zweite Ausbringungöffnung wird dabei über einen Strömungsweg, der durch den Grubberzinken führt, mit der feststoffhaltigen Gülle versorgt. Der Grubberzinken kann beispielsweise als zylindrisches Rohr, als Rohr mit elliptischem Querschnitt oder dergleichen ausgeführt sein. Die erste Ausbringöffnung kann ebenfalls integral an dem Grubberzinken ausgeführt sein und über einen entsprechenden Strömungsweg, der von dem Strömungsweg zur zweiten Ausbringöffnung vorzugsweise getrennt ist, mit der feststoffhaltigen Gülle beaufschlagt werden. In diesem Fall sind an dem Grubberzinken zwei Anschlüsse und gegebenenfalls drei für die entsprechende Verbindungsleitungen zur ersten und zweiten Ausbringöffnung vorgesehen. Ebenso kann die erste Ausbringöffnung lediglich direkt oder indirekt mit dem Grubberzinken verbunden sein, beispielsweise durch eine entsprechende Düse gebildet werden, die an dem Grubberzinken befestigt ist und die ihrerseits mit der Verbindungsleitung fluidleitend verbunden ist.

Ein weiterer Aspekt der Erfindung ist eine Verteilervorrichtung zur Verteilung feststoffhaltiger Gülle mit den Merkmalen von Anspruch 11.

Diese Verteilervorrichtung entspricht der Verteilervorrichtung, die zuvor in Zusammenhang mit der erfindungsgemäßen Vorrichtung zur Einbringung eines feststoffhaltigen Gülledepots beschrieben wurde und eignet sich dafür, feststoffhaltige Gülle solcher Art auf mehrere Leitungen zu verteilen, dass diese durch eine entsprechende Einbringvorrichtung in zwei vertikal beabstandeten Ebenen in eine Erdschicht eingebracht werden kann.

Dabei ist zu verstehen, dass die Verteilervorrichtung fortgebildet werden kann gemäß den zuvor erläuterten Fortbildungen für die Verteilervorrichtung der erfindungsgemäßen Einbringvorrichtung, insbesondere können die ersten und zweiten Ausgangsöffnungen gemäß den bevorzugten Ausführungsformen, die zuvor erläutert wurden, ausgeführt sein, es kann ein Satz dritter Ausgangsöffnungen mit entsprechend dritten Anschlussstutzen vorgesehen sein und es kann eine Schneidvorrichtung in den zuvor beschriebenen Bauweisen vorgesehen sein. Schließlich ist ein weiterer Aspekt der Erfindung ein Verfahren zum Einbringen feststoffhaltiger Gülle in eine Erdschicht nach Anspruch 13, mit den Schritten: Einbringen einer Mehrzahl von ersten Gülledepots aus einer entsprechenden Mehrzahl von ersten Ausbringöffnungen in eine oberflächenferne erste Schichtebene, Einbringen einer Mehrzahl von zweiten Gülledepots aus einer entsprechenden Mehrzahl von zweiten Ausbringöffnungen in eine oberflächennahe zweite Schichtebene, Zuführen der feststoffhaltigen Gülle zu den ersten Ausbringöffnungen über eine Mehrzahl von ersten Verbindungsleitungen, wobei jede erste Verbindungsleitung an ihrem Anfang mit jeweils einer ersten Auslassöffnung einer entsprechenden Mehrzahl von ersten Auslassöffnungen und an ihrem Ende mit einer der ersten Ausbringöffnungen in Verbindung steht, Zuführen der feststoffhaltigen Gülle zu den zweiten Ausbringöffnungen über eine Mehrzahl von zweiten Verbindungsleitungen, wobei jede zweite Verbindungsleitung an ihrem Anfang mit jeweils einer zweiten Auslassöffnung einer entsprechenden Mehrzahl von zweiten Auslassöffnungen und an ihrem Ende mit jeweils einer der zweiten Ausbringöffnungen in Verbindung steht, Einleiten der feststoffhaltigen Gülle in einen Verteilerinnenraum, und Verteilen der feststoffhaltigen Gülle aus dem Verteilerinnenraum auf die ersten und zweiten Auslassöffnungen.

Das Verfahren kann dabei fortgebildet werden, indem die feststoffhaltige Gülle ausgehend von der Einlassöffnung über eine Verteilervorrichtung und daran angeschlossene Verbindungsleitungen und einer Einbringvorrichtung der zuvor erläuterten Bauweise mit an die ersten und zweiten Ausbringöffnungen geleitet wird.

Bevorzugte Ausführungsformen der Erfindung werden anhand der beiliegenden Figuren erläutert. Es zeigen:
- Figur 1: eine schematische Seitenansicht einer erfindungsgemäßen Vorrichtung zur Einbringung von Gülledepots in eine Bodenschicht in einer Anwendung auf einem Grubber, der an ein Tankfahrzeug gekoppelt ist,
- Figur 2a: eine schematische, perspektivische Ansicht von schräg oben einer erfindungsgemäßen Verteilervorrichtung ohne eingesetztem Schneidrotor in einer ersten Ausführungsform,
- Figur 2b: die Ansicht gemäß Figur 2a mit eingesetzten Schneidrotor,
- Figur 2c: eine Draufsicht auf die Ausführungsform gemäß Figur 2a und b ohne eingesetzten Schneidrotor, und
- Figur 2d:: eine Draufsicht gemäß Figur 2c mit eingesetztem Schneidrotor,
- Figur 3a-d:: Ansichten gemäß Figur 2a-d einer zweiten Ausführungsform einer erfindungsgemäßen Verteilervorrichtung,
- Figur 4a-d:: Ansichten gemäß Figur 2a-d einer dritten Ausführungsform einer erfindungsgemäßen Verteilervorrichtung,
- Figur 5a-d:: Ansichten gemäß Figur 2a-d einer vierten Ausführungsform einer erfindungsgemäßen Verteilervorrichtung.

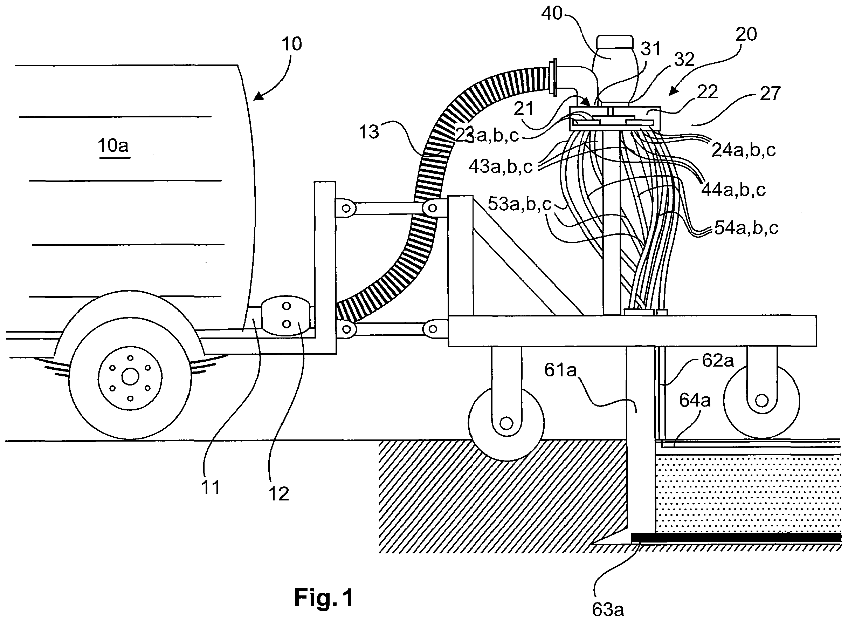

Bezugnehmend zunächst auf Figur 1 ist ein Tankwagen 10 gezeigt, der beispielsweise durch einen Schlepper in nebeneinander liegenden Bahnen über eine Anbaufläche geschleppt werden kann. Das Tankfahrzeug 10 umfasst einen Tank 10a, der einen Vorrat von feststoffhaltiger Gülle aufnimmt. Über einen Tankauslass 11 wird die feststoffhaltige Gülle einer Pumpvorrichtung wie beispielsweise einer Drehkolbenpumpe 12 zugeführt und mittels dieser Pumpvorrichtung über einen Zufuhrschlauch 13 einer erfindungsgemäßen Verteilervorrichtung 20 zugeführt. Der Zufuhrschlauch 13 ist an einer Einlassöffnung 21 der Verteilervorrichtung 20 angeschlossen und führt die feststoffhaltige Gülle in einen Verteilerinnenraum 22. Die Einlassöffnung 21 ist auf einer Seite in axialer Richtung in den Verteilerinnenraum 22 mündend.

Auf der hierzu gegenüberliegenden Seite ist eine Mehrzahl von Auslassöffnungen 23a, b, c, 24a, b, c angeordnet. Diese Auslassöffnungen sind fluchtend mit Anschlussstutzen 43a, b, c, 44a, b, c angeordnet.

Die Auslassöffnungen 23a, b, c, 24a, b, c sind in einer Schneidplatte 27 angeordnet, die an der der Einlassöffnung 21 gegenüberliegenden axialen Stirnseite im Verteilerinnenraum angeordnet und ortsfest befestigt ist.

Schneidmesser 31, 32 sind an einem im Verteilerinnenraum 22 angeordneten Messerträger (in Fig. 1 nicht dargestellt) befestigt und werden durch einen Antriebsmotor 40 in Rotation versetzt. Die Schneidmesser 31, 32 liegen auf der zum Innenraum weisenden Seite der Schneidplatte 27 auf und streichen somit über die Auslassöffnungen 23a, b, c, 24a, b, c. Hierdurch tritt eine Scherwirkung zwischen den Schneidmessern 31, 32 und den zum Verteilerinnenraum weisenden Kanten der Auslassöffnungen 23a, b, c, 24a, b, c auf.

An die Anschlussstutzen 43a, b, c, 44a, b, c sind eine Vielzahl von Schlauchleitungen 53a, b, c, 54a, b, c angeschlossen. Diese Schlauchleitungen verbinden die Verteilervorrichtung mit einer Mehrzahl von ersten Ausbringöffnungen und einer Mehrzahl von zweiten Ausbringöffnungen.

In der Seitenansicht gemäß Figur 1 ist lediglich eine erste Ausbringöffnung 63a und eine zweite Ausbringöffnung 64a ersichtlich. Die weiteren Ausbringöffnungen liegen in einer Reihe quer zur Fahrtrichtung des Tankfahrzeugs 10 hinter dieser ersten und zweiten Ausbringöffnung 63a, 64a.

Der Anschlussstutzen 43a gehört zum ersten Satz von Anschlussstutzen und Auslassöffnungen und wird mittels der Schlauchleitung 53a des ersten Satzes von Schlauchleitungen mit dem inneren Hohlraum eines Grubberzinkens 61a verbunden. Die feststoffhaltige Gülle strömt aus der ersten Auslassöffnung 23a über den Verbindungsschlauch 53a in den Grubberzinken 61a und innerhalb des Grubberzinkens zu der am unteren Ende des Grubberzinkens angeordneten ersten Ausbringöffnung 63a.

Die Auslassöffnung 24a ist mit einem über den Anschlussstutzen 44a und dem Verbindungsschlauch 54a verbunden. Der Verbindungsschlauch 54a ist mit einem Einbringstutzen 62a verbunden, der in Fahrtrichtung fluchtend hinter dem Grubberzinken 61a angeordnet ist. Der Einbringstutzen 62a erstreckt sich bis in eine obere Schichtebene der Bodenschicht und weist an seinem unteren Ende die zweite Ausbringöffnung 64a auf. Diese zweite Ausbringöffnung 64a liegt auf einer höheren Ebene als die erste Ausbringöffnung 63a.

Wie man weiterhin erkennen kann, ist die zweite Auslassöffnung 24a, der zweite Auslassstutzen 44a, der zweite Verbindungsschlauch 54a und die zweite Ausbringöffnung 64a mit einem kleineren Durchmesser ausgebildet als die entsprechend erste Auslassöffnung 23a, der erste Anschlussstutzen 43a, der erste Verbindungsschlauch 53a und die zweite Ausbringöffnung 63a. Die Querschnittsfläche der zweiten Austrittsöffnung und der flüssigkeitsleitenden Elemente bis zur zweiten Ausbringöffnung ist daher kleiner als die Querschnittsfläche der ersten Austrittsöffnung.

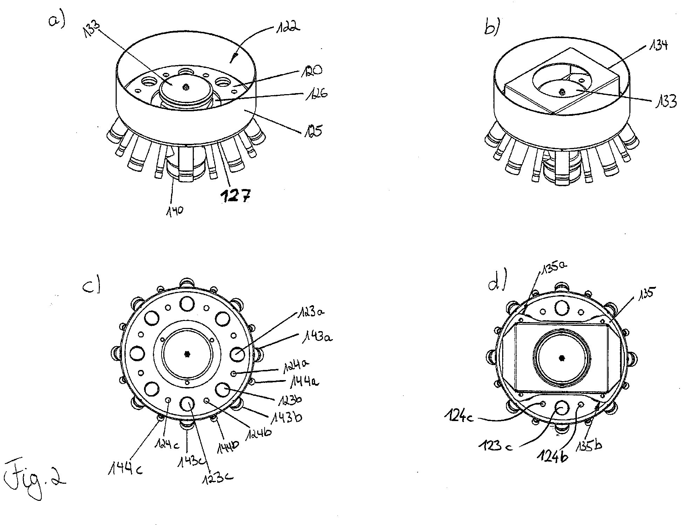

Figur 2 zeigt eine erste Ausführungsform einer erfindungsgemäßen Verteilervorrichtung in einer perspektivischen Ansicht von schräg oben in a) und b) und einer Draufsicht in c) und d). Bei allen Darstellungen ist ein oberer Gehäusedeckel zum besseren Verständnis der Funktionsweise nicht abgebildet. Zusätzlich ist in den Figuren a und c ein Messerrotor nicht in den Verteilerinnenraum eingesetzt.

Die Verteilervorrichtung gemäß Figur 2 weist einen Verteilerinnenraum 122 auf, der seitlich durch einen Rohrwandabschnitt 125 begrenzt wird. Der Verteilerinnenraum wird nach oben durch einen Gehäusedeckel (nicht abgebildet) begrenzt, in den eine Einlassöffnung zur Zufuhr von feststoffhaltiger Gülle in den Verteilerinnenraum angeordnet ist.

Nach unten wird der Verteilerinnenraum durch eine Schneidplatte 120 begrenzt. Die Schneidplatte weist eine große zentrale Öffnung 126 auf, durch die ein Messerflansch 133 hindurch ragt. Der Messerflansch 133 ist mit einem unterhalb der Schneidplatte 120 liegenden Antriebsmotor 140 gekoppelt und wird durch diesen Antriebsmotor, der im Ausführungsbeispiel als Elektromotor ausgeführt ist, in Rotation versetzt. Der Antriebsmotor 140 liegt außerhalb des Verteilerinnenraums.

Die ringförmige Schneidplatte 120 weist einen ersten Satz von insgesamt acht Auslassöffnungen 123a,b,c, auf, die einen ersten Durchmesser haben. Diese Austrittsöffnungen 123a,b,c stellen dadurch einen ersten Auslassquerschnitt bereit, durch den die feststoffhaltige Gülle aus dem Verteilerinnenraum hinaustreten kann.

Weiterhin ist in der Schneidplatte ein zweiter Satz von insgesamt acht zweiten Auslassöffnungen 124a,b,c angeordnet, die einen zweiten Durchmesser aufweisen. Dieser zweite Durchmesser ist kleiner als der erste Durchmesser, wodurch die zweiten Auslassöffnungen einen kleineren Auslassquerschnitt aufweisen als die ersten Auslassöffnungen.

Die ersten und zweiten Auslassöffnungen sind gleichmäßig auf einer Kreisbahn, die konzentrisch zur Drehachse des Schneidmesserflansches 133 liegt, verteilt und jeweils wechselweise solcher Art angeordnet, dass eine zweite Auslassöffnung jeweils zwischen zwei ersten Auslassöffnungen liegt und umgekehrt.

Jede erste Auslassöffnung ist mit einem ersten Anschlussstutzen 143a,b,c in Fluidverbindung. Die ersten Anschlussstutzen erstrecken sich ausgehend von der Unterseite der Verteilervorrichtung mit einer im Wesentlichen axialen Ausrichtung mit leicht nach radial auswärts geneigter Erstreckung. Die ersten Anschlussflansche 143a,b,c sind als Rundrohrabschnitte ausgebildet und weisen einen Innendurchmesser auf, welcher dem Durchmesser der ersten Auslassöffnungen entspricht.

In gleicher Weise hierzu sind die zweiten Auslassöffnungen 124a,b,c mit zweiten Anschlussstutzen 144a,b,c in Fluidverbindung, die sich wiederum axial-schräg radial auswärts erstrecken. Die zweiten Anschlussstutzen 144a,b,c sind ebenfalls als Rundrohrabschnitte ausgeführt und weisen einen Innendurchmesser auf, der dem Innendurchmesser der zweiten Auslassöffnungen entspricht.

Die ersten und zweiten Anschlussstutzen 143a,b,c; 144a,b,c sind an einer unteren Gehäuseplatte 127 befestigt, auf der die Schneidplatte 120 im Verteilerinnenraum aufliegt und daran drehmomentfest befestigt ist.

Wie aus den Figuren 2b) und 2d) ersichtlich, ist ein etwa quaderförmiger Schneidmesserträger 134 drehmomentfest mit dem Drehmesserflansch 133 verbunden. Der Schneidmesserträger verdeckt etwa zehn der insgesamt sechzehn Ausgangsöffnungen und verhindert dadurch in der abgebildeten Position den Durchfluss durch die in Figur 2 nicht sichtbaren Auslassöffnungen. Hierdurch wird jeweils nur etwa ein Drittel der Anzahl der Ausgangsöffnungen mit feststoffhaltiger Gülle beaufschlagt.

Der Schneidmesserträger wird durch den Antriebsmotor 140 in Rotation versetzt, sodass laufend andere Ausgangsöffnungen freigegeben und mit der feststoffhaltigen Gülle beaufschlagt werden. Der Antriebsmotor kann ein Hydraulikmotor sein, ebenso kann ein Antriebsmotor über einen Zapfwellenantrieb angeschlossen sein. Ebenso könnte der Antriebsmotor ein Elektromotor sein. Durch das Zusammenwirken des Schneidmesserhalters mit den Ausgangsöffnungen und dessen Rotation über die Ausgangsöffnungen werden die Ausgangsöffnungen pulsationsartig mit der feststoffhaltigen Gülle beaufschlagt. Dabei kann die feststoffhaltige Gülle in einen Innenraum des rotierenden Messerhalters zugeführt werden und aus diesem Innenraum den Auslassöffnungen zugeführt werden. In diesem Fall ist der Verteilerinnenraum außerhalb des Schneidmesserträgers nicht mit feststoffhaltiger Gülle beaufschlagt. Dieser Teil des Verteilerinnenraums kann belüftet sein, sodass Luft in die Auslassöffnungen nachgesaugt werden kann, was zu intermittierend durch die Schlauchleitungen fließenden Blöcken von Gülle und Luft führt und die Verteilgenauigkeit und Strömungsgleichmäßigkeit erhöht. Erfindungsgemäß kann ebenso die feststoffhaltige Gülle dem außerhalb des Messerträgers liegenden Teil des Verteilerinnenraums zugeführt werden. In diesem Fall fließt die feststoffhaltige Gülle aus dem außerhalb des Messerrotors liegenden Teil des Verteilerinnenraums in die Auslassöffnungen. Der Innenraum des Messerträgers kann hierbei wiederum belüftet sein, um ein Nachströmen von Luft und eine gleichmäßige Verteilung und kontinuierliche Strömung zu erreichen. Für hohe Ausbringmengen kann die Anzahl der Auslassöffnungen, die von dem Innenraum des Messerträgers bei der ersten Variante überdeckt werden, hoch gewählt werden, bzw. bei der zweiten Variante niedrig gewählt werden. In einer alternativen Ausgestaltung kann auch sowohl der innerhalb als auch der außerhalb des Innenraums des Messeträgers liegende Teil des Verteilerinnenraums mit Gülle beaufschlagt werden.

An dem Schneidmesserträger 134 ist auf der zur Schneidplatte 120 weisenden Seite ein Schneidmesser 135 befestigt. Die Schneidmesser weisen Schneidkanten 135a,b auf, die zu der Schneidplatte 120 weisen und auf dieser aufliegen. Durch die Rotation des Schneidmesserträgers werden diese Schneidkanten relativ zu den Ausgangsöffnungen bewegt und bewirken an den Kanten der Auslassöffnungen eine Scherwirkung auf dem Feststoffanteil in der Gülle. Hierdurch wird durch die konstante Rotation der Schneidmesserkanten in den Verteilerinnenraum eine Zerkleinerung der Feststoffanteile der Gülle im Bereich der Ausgangsöffnungen bewirkt und die Ausgangsöffnungen hierdurch vor Verstopfung bewahrt. Die Zerkleinerung der Feststoffe erzeugt weiterhin eine gute Fließfähigkeit der feststoffhaltigen Gülle durch die Anschlussstutzen und die daran anschließenden flüssigkeitsleitenden Bauteile und verhindert so wirksam eine Verstopfung in den stromabwärts gelegenen Bauteilen.

Die abgebildete erste Ausführungsform dient dazu, einen ersten Satz Verbindungsleitungen an die ersten Anschlussstutzen anzuschließen und hiermit ein tiefes Gülledepot in die Bodenschicht einzubringen. Ein zweiter Satz Verbindungsleitungen ist an die zweiten Anschlussstutzen anzuschließen und bringt ein darüber liegendes, hohes Gülledepot in die Bodenschicht ein. Dieses hohe Gülledepot hat dabei ein kleineres Volumen als das tiefe Gülledepot

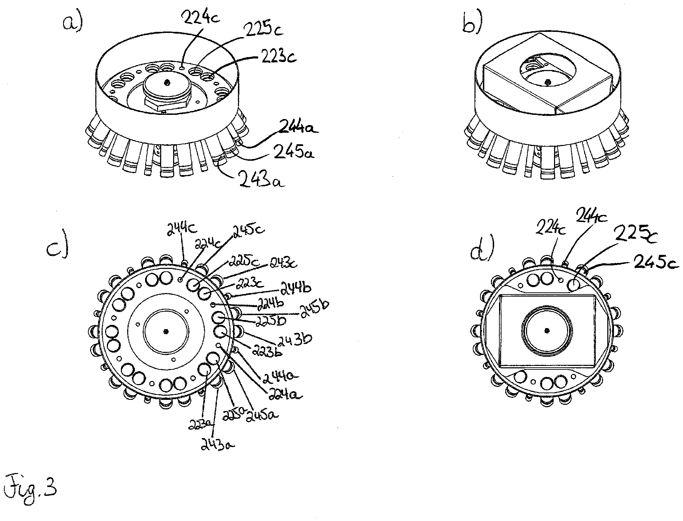

Die Figuren 3a-d zeigen eine zweite Ausführungsform einer erfindungsgemäßen Verteilervorrichtung. Die Verteilervorrichtung ist baugleich zu der Verteilervorrichtung gemäß der ersten Ausführungsform nach Figuren 2a-d ausgebildet und unterscheidet sich lediglich in der Ausgestaltung der Auslassöffnungen und Anschlussstutzen von dieser ersten Ausführungsform.

Entgegen der ersten Ausführungsform sind bei der zweiten Ausführungsform ein erster Satz Auslassöffnungen 223a,b,c, ein zweiter Satz Auslassöffnungen 224a,b,c und ein dritter Satz Auslassöffnungen 225a,b,c in einer Schneidplatte 220 vorgesehen. Die ersten Auslassöffnungen weisen einen ersten Durchmesser und damit eine erste Durchtrittsquerschnittsfläche auf und stehen mit einem Satz erster Anschlussstutzen 243a,b,c in Fluidverbindung. Die ersten Anschlussstutzen weisen einen übereinstimmenden Innendurchmesser auf wie die ersten Auslassöffnungen und erstrecken sich in gleicher Weise wie die Anschlussstutzen der ersten Ausführungsform.

Die zweiten Auslassöffnungen 224a,b,c weisen einen kleineren Durchmesser und damit eine kleinere Durchtrittsquerschnittsfläche auf als die ersten Auslassöffnungen. Sie stehen in Fluidverbindung mit einem Satz zweiter Anschlussstutzen 244a,b,c die einen übereinstimmenden Innendurchmesser zu den zweiten Auslassöffnungen aufweisen.

Die dritten Auslassöffnungen 225a,b,c weisen einen Durchmesser auf, der dem Durchmesser der ersten Ausgangsöffnungen 223a,b,c entspricht und haben eine entsprechend übereinstimmende Durchtrittsquerschnittsfläche. Die dritten Auslassöffnungen stehen mit dritten Anschlussstutzen 245a,b,c in Fluidverbindung, die einen übereinstimmenden Innendurchmesser wie die dritten Auslassöffnungen aufweisen.

Jeweils eine erste und eine dritte Ausgangsöffnung sind benachbart zueinander angeordnet, in Umfangsrichtung gefolgt von einer zweiten Ausgangsöffnung, sodass sich eine Abfolge einer ersten, zweiten und dritten Ausgangsöffnung jeweils wechselweise auf einer Kreisbahn der Schneidplatte 220 ergibt. Der Abstand von Mitte zu Mitte der Ausgangsöffnungen ist dabei jeweils gleich, sodass die Ausgangsöffnungen gleichmäßig über die Kreisbahn verteilt sind.

Die zweite Ausführungsform dient dazu, an die ersten und dritten Ausgangsöffnungen und Anschlussstutzen entsprechend erste und dritte Verbindungsleitungen anzuschließen und hiermit eine tiefliegende Ausbringöffnung mit feststoffhaltiger Gülle zu beaufschlagen, um ein volumenmäßig größeres, tiefes Gülledepot in die Bodenschicht einzubringen als bei der ersten Ausführungsform. Die zweiten Ausgangsöffnungen werden wiederum über die zweiten Anschlussstutzen mit zweiten Verbindungsleitungen verbunden, um hierdurch eine zweite Ausbringöffnung mit feststoffhaltiger Gülle zu beaufschlagen, die ein volumenmäßig kleineres, hohes Gülledepot in die Bodenschicht einzubringen. Die zweite Ausführungsform kann variabel auch so mit den Ausbringöffnungen verbunden werden, dass die erste und zweite Ausgangsöffnung mit einer ersten, tiefliegenden Ausbringöffnung verbunden werden und die dritten Ausgangsöffnungen mit einer zweiten Ausbringöffnung zur Ausbringung eines hohen Gülledepots verbunden werden. In diesem Fall ist der Volumenunterschied zwischen dem tiefen Gülledepot und dem hohen Gülledepot geringer und liegt lediglich in der zusätzlich durch die kleinen zweiten Ausgangsöffnungen geförderten Güllemenge.

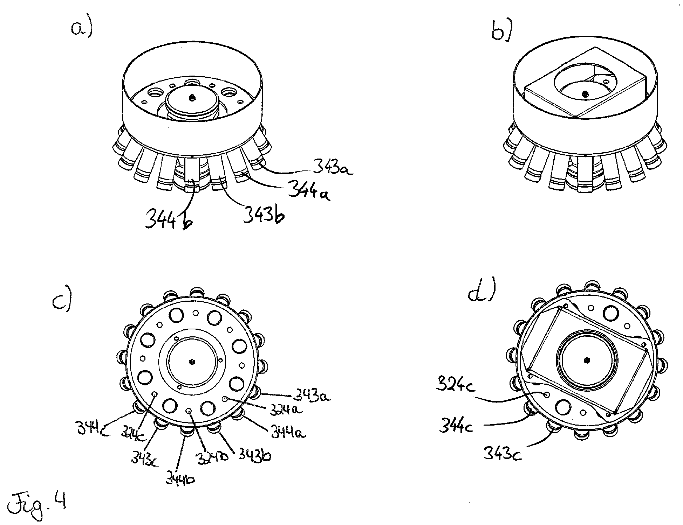

Figur 4 (Position 343a,b,c nicht im Text enthalten) zeigt eine dritte Ausführungsform einer erfindungsgemäßen Verteilervorrichtung, die hinsichtlich der Ausgestaltung des Verteilerinnenraums und der Schneidplatte sowie der darin ausgebildeten Ausgangsöffnungen der ersten Ausführungsform gemäß Figur 2 entspricht. Die dritte Ausführungsform unterscheidet sich von der ersten Ausführungsform jedoch darin, dass die zweiten Anschlussstutzen 344a,b,c einen gegenüber den zweiten Ausgangsöffnungen 324a,b,c vergrößerten Innendurchmesser aufweisen und insbesondere einen Innendurchmesser aufweisen, der übereinstimmend zu dem Innendurchmesser der ersten Anschlussstutzen ist. Hierdurch können bei dieser Verteilervorrichtung erste und zweite Verbindungsleitungen mit übereinstimmendem Anschlussdurchmesser eingesetzt werden, was die Montage sowie etwaige variable Umbaumaßnahmen erleichtert, weil einheitliche Schlauchabmessungen verwendet werden können und die Schläuche in ihrem Anschlusspunkt untereinander austauschbar sind.

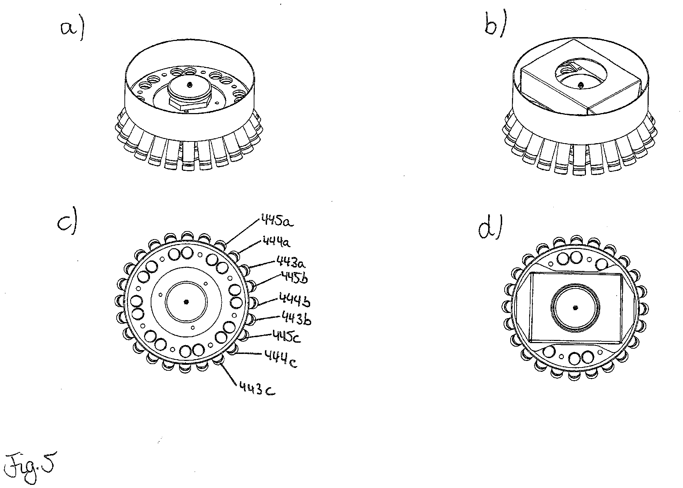

Figur 5 zeigt eine vierte Ausführungsform der erfindungsgemäßen Verteilervorrichtung, welche in analoger Weise zur zweiten Ausführungsform aufgebaut ist wie die dritte zur ersten Ausführungsform. Wiederum sind die ersten, zweiten und dritten Auslassöffnungen übereinstimmend zu den ersten, zweiten und dritten Auslassöffnungen der zweiten Ausführungsform ausgebildet, jedoch im Unterschied zu dieser zweiten Ausführungsform mit Anschlussstutzen 443a,b,c, 444a,b,c, 445a,b,c verbunden, die einen übereinstimmenden Innendurchmesser aufweisen, der dem Durchmesser der ersten und dritten Auslassöffnungen entspricht. Insbesondere hier liegen die Vorteile der vierten Ausführungsform in der leichten Austauschbarkeit der Anschlussleitungen zwischen den ersten, zweiten und dritten Anschlussstutzen, sodass eine Variabilität in der Volumenzufuhr zu den Ausbringöffnungen durch entsprechenden variablen Anschluss der Verbindungsleitungen an der Verteilervorrichtung ohne die Notwendigkeit einer Verwendung neuer Bauteile möglich ist.

## Patentansprüche

1. Vorrichtung zur Einbringung eines feststoffhaltigen Gülledepots in eine Erdschicht, umfassend
a) eine Einbringvorrichtung mit einem Satz von ersten Ausbringöffnungen (63a) und einem Satz von zweiten Ausbringöffnungen (64a), die in Arbeitsposition der Einbringvorrichtung vertikal beabstandet sind von den ersten Ausbringöffnungen,
b) eine Verteilervorrichtung (20), umfassend
∘ einen Verteilerinnenraum (122),
∘ eine in den Verteilerinnenraum (122) mündende Eingangsöffnung (21) zur Zufuhr von feststoffhaltiger Gülle,
∘ einen ersten Satz von mehreren ersten Ausgangsöffnungen (23) zum Ableiten der feststoffhaltigen Gülle aus dem Verteilerinnenraum (122), und
∘ einen zweiten Satz von mehreren zweiten Ausgangsöffnungen (24) zum Ableiten der feststoffhaltigen Gülle aus dem Verteilerinnenraum (122),
c) einen ersten Satz von mehreren ersten Verbindungsleitungen (53), wobei sich jede erste Verbindungsleitung (53) von einem Leitungsanfang zu einem Leitungsende erstreckt, an ihrem Leitungsanfang mit einer ersten Ausgangsöffnung (23) verbunden ist und an ihrem Leitungsende mit einer ersten Ausbringöffnung (63) aus dem Satz von ersten Ausbringöffnungen (63) verbunden ist,
d) einen zweiten Satz von mehreren zweiten Verbindungsleitungen (54), wobei sich jede zweite Verbindungsleitung (54) von einem Leitungsanfang zu einem Leitungsende erstreckt, an ihrem Leitungsanfang mit einer zweiten Ausgangsöffnung (24) verbunden ist und an ihrem Leitungsende mit einer zweiten Ausbringöffnung (64) aus dem Satz von zweiten Ausbringöffnungen (64) verbunden ist, **dadurch gekennzeichnet, dass** die ersten Ausgangsöffnungen (23) eine größere Querschnittsflächengröße haben als die zweiten Ausgangsöffnungen (24).

2. Vorrichtung nach Anspruch 1,
**gekennzeichnet durch** einen dritten Satz von mehreren dritten Ausgangsöffnungen zum Ableiten der feststoffhaltigen Gülle aus dem Verteilerraum (122)
und einen dritten Satz von mehreren dritten Verbindungsleitungen, wobei sich jede dritte Verbindungsleitung von einem Leitungsanfang zu einem Leitungsende erstreckt, an ihrem Leitungsanfang mit einer dritten Ausgangsöffnung verbunden ist und an ihrem Leitungsende mit einer ersten Ausbringöffnung (63) verbunden ist.

3. Vorrichtung nach dem vorhergehenden Anspruch, **dadurch gekennzeichnet, dass**
- die ersten und dritten Ausgangsöffnungen eine voneinander verschiedene Querschnittsflächengröße haben,
oder dass
- die ersten und dritten Ausgangsöffnungen eine übereinstimmende Querschnittsflächengröße haben .

4. Vorrichtung nach einem der vorhergehenden Ansprüche,
**dadurch gekennzeichnet, dass** im Verteilerinnenraum (122) eine Schneidvorrichtung angeordnet ist, die relativ beweglich zu den ersten und zweiten Ausgangsöffnungen (23, 24) ist,
wobei vorzugsweise die Schneidvorrichtung eine Schneidkante aufweist und solcherart beweglich geführt ist, dass sie über den Rand von zumindest einer Anzahl der ersten und/oder zweiten und/oder gegebenenfalls dritten Öffnungen streicht.

5. Vorrichtung nach Anspruch 4,
**dadurch gekennzeichnet, dass** die Schneidvorrichtung über den Rand von allen oder einigen der aller ersten, zweiten und/oder dritten Öffnungen streicht.

6. Vorrichtung nach Anspruch 4 oder 5,
**dadurch gekennzeichnet, dass** die Schneidvorrichtung mehrere Schneidkanten aufweist, von denen jeweils jede über zumindest eine Anzahl von ersten, zweiten und/oder gegebenenfalls dritten Öffnungen streicht.

7. Vorrichtung nach einem der vorhergehenden Ansprüche 4-6,
**dadurch gekennzeichnet, dass** die Schneidvorrichtung um eine Rotationsachse drehbar gelagert ist und mittels einer Antriebseinrichtung in eine Rotations- oder Schwenkbewegung versetzt wird.

8. Vorrichtung nach dem Anspruch 6, **dadurch gekennzeichnet, dass** die ersten, zweiten und gegebenenfalls dritten
Öffnungen in einer ebenen Schneidplatte (120) ausgebildet sind.

9. Vorrichtung nach einem der vorhergehenden Ansprüche,
**dadurch gekennzeichnet, dass** sich der Durchtrittsquerschnitt eines Fluidleitungspfades ausgehend von einer Ausgangsöffnung bis zu einer Ausbringöffnung nicht verringert..

10. Vorrichtung nach einem der vorhergehenden Ansprüche,
**dadurch gekennzeichnet, dass** die erste und zweite Ausbringöffnung an einem hohl ausgebildeten Grubberzinken (61) angeordnet sind, der einen innenliegenden Hohlraum aufweist, in den die zweite und gfs. dritte Verbindungsleitung mündet und mit dem die zweite Ausbringöffnung in Fluidverbindung steht.

11. Verteilervorrichtung zur Verteilung feststoffhaltiger Gülle auf eine Mehrzahl von Ausbringöffnungen umfassend
∘ einen Verteilerinnenraum (122),
∘ eine in den Verteilerinnenraum (122) mündende Eingangsöffnung (21) zur Zufuhr von feststoffhaltiger Gülle,
∘ einen ersten Satz von mehreren ersten Ausgangsöffnungen (23) zum Ableiten der feststoffhaltigen Gülle aus dem Verteilerinnenraum (122), und
∘ einen zweiten Satz von mehreren zweiten Ausgangsöffnungen (24) zum Ableiten der feststoffhaltigen Gülle aus dem Verteilerinnenraum (122),
a) einen ersten Satz von mehreren ersten Anschlüssen, wobei jeder erste Anschluss in Fluidkommunikation mit einer der ersten Ausgangsöffnungen (23) steht und ausgebildet ist zum Anschluss einer ersten Verbindungsleitung (53),
b) einen zweiten Satz von mehreren zweiten Anschlüssen, wobei jeder zweite Anschluss in Fluidkommunikation mit einer der zweiten Ausgangsöffnungen (24) steht und ausgebildet ist zum Anschluss einer zweiten Verbindungsleitung (54), **dadurch gekennzeichnet, dass** die ersten Ausgangsöffnungen (23) eine größere Querschnittsflächengröße haben als die zweiten Ausgangsöffnungen (24).

12. Verteilervorrichtung nach Anspruch 11, **gekennzeichnet durch** eines oder mehrere der Merkmale der Verteilervorrichtung der Vorrichtung nach einem der vorhergehenden Ansprüche 2-10.

13. Verfahren zum Einbringen feststoffhaltiger Gülle in eine Erdschicht, mit den Schritten:
a) Einbringen einer Mehrzahl von ersten Gülledepots aus einer entsprechenden Mehrzahl von ersten Ausbringöffnungen (63) in eine oberflächenferne erste Schichtebene,
b) Einbringen einer Mehrzahl von zweiten Gülledepots aus einer entsprechenden Mehrzahl von zweiten Ausbringöffnungen (64) in eine oberflächennahe zweite Schichtebene,
c) Zuführen der feststoffhaltigen Gülle zu den ersten Ausbringöffnungen (63) über eine Mehrzahl von ersten Verbindungsleitungen (53), wobei jede erste Verbindungsleitung (53) an ihrem Anfang mit jeweils einer ersten Auslassöffnung (23) einer entsprechenden Mehrzahl von ersten Auslassöffnungen (23) und an ihrem Ende mit einer der ersten Ausbringöffnungen (63) in Verbindung steht,
d) Zuführen der feststoffhaltigen Gülle zu den zweiten Ausbringöffnungen (64) über eine Mehrzahl von zweiten Verbindungsleitungen (54), wobei jede zweite Verbindungsleitung (54) an ihrem Anfang mit jeweils eine der zweiten Auslassöffnungen (24) einer entsprechenden Mehrzahl von zweiten Auslassöffnungen (24) und an ihrem Ende mit jeweils einer der zweiten Ausbringöffnungen (64) in Verbindung steht, wobei die ersten Auslassöffungen (23) eine größere Querschnittsflächengröße haben als die zweiten Auslassöffnungen (24)
e) Einleiten der feststoffhaltigen Gülle in einen Verteilerinnenraum (122), und
f) Verteilen der feststoffhaltigen Gülle aus dem Verteilerinnenraum (122) auf die ersten und zweiten Auslassöffnungen (23, 24).

14. Verfahren nach Anspruch 13, **dadurch gekennzeichnet, dass** die feststoffhaltige Gülle ausgehend von der Einlassöffnung über eine Verteilervorrichtung und daran angeschlossene Verbindungsleitungen und eine Einbringvorrichtung nach einem der vorhergehenden Ansprüche 1-10 an die ersten und zweiten Auslassöffnungen geleitet wird.

## Claims

1. Device for introducing a solids-containing slurry deposit into a layer of earth, comprising
a) an introduction device having a set of first application openings (63a) and a set of second application openings (64a) which, in the operating position of the introduction device, are vertically spaced apart from the first application openings,
b) a distributor device (20) comprising
∘ a distributor interior (122),
∘ an input opening (21), which opens into the distributor interior (122), for supplying solids-containing slurry,
∘ a first set of a plurality of first output openings (23) for discharging the solids-containing slurry from the distributor interior (122), and
∘ a second set of a plurality of second output openings (24) for discharging the solids-containing slurry from the distributor interior (122),
c) a first set of a plurality of first connection lines (53), each first connection line (53) extending from a line start to a line end, being connected at the line start thereof to a first output opening (23), and being connected at the line end thereof to a first application opening (63) of the set of first application openings (63),
d) a second set of a plurality of second connection lines (54), each second connection line (54) extending from a line start to a line end, being connected at the line start thereof to a second output opening (24), and being connected at the line end thereof to a second application opening (64) of the set of second application openings (64),
**characterised in that** the first output openings (23) have a larger cross-sectional area than the second output openings (24) .

2. Device according to claim 1,
**characterised by** a third set of a plurality of third output openings for discharging the solids-containing slurry from the distributor space (122) and a third set of a plurality of third connection lines, each third connection line extending from a line start to a line end, being connected at the line start thereof to a third output opening, and being connected at the line end thereof to a first application opening (63).

3. Device according to the preceding claim, **characterised in that**
- the first and third output openings have a different cross-sectional area from one another,
or **in that**
- the first and third output openings have a matching cross-sectional area.

4. Device according to any of the preceding claims,
**characterised in that** a cutting device, which is movable relative to the first and second application openings (23, 24), is arranged in the distributor interior (122),
the cutting device preferably having a cutting edge and being guided movably in such a way that it sweeps over the edge of at least a number of the first and/or second and/or if applicable third openings.

5. Device according to claim 4,
**characterised in that** the cutting device sweeps over the edge of some or all of the first, second and/or third openings.

6. Device according to either claim 4 or claim 5,
**characterised in that** the cutting device has a plurality of cutting edges, each of which sweeps over at least a number of first, second and/or if applicable third openings.

7. Device according to any of preceding claims 4-6,
**characterised in that** the cutting device is mounted rotatably about an axis of rotation and is set in a rotational or pivoting movement by a drive means.

8. Device according to claim 6,
**characterised in that** the first, second and if applicable third openings are formed in a planar cutting plate (120).

9. Device according to any of the preceding claims,
**characterised in that**, proceeding from an output opening to an application opening, the clear cross section of a fluid line path does not decrease.

10. Device according to any of the preceding claims,
**characterised in that** the first and second application opening are arranged on a cultivator tine (61), which is formed hollow and has an internal cavity, into which the second and if applicable third connection line open and with which the second application opening is in a fluid connection.

11. Distributor device for distributing solids-containing slurry to a plurality of application openings, comprising
∘ a distributor interior (122),
∘ an input opening (21), which opens into the distributor interior (122), for supplying solids-containing slurry,
∘ a first set of a plurality of first output openings (23) for discharging the solids-containing slurry from the distributor interior (122), and
∘ a second set of a plurality of second output openings (24) for discharging the solids-containing slurry from the distributor interior (122),
a) a first set of a plurality of first terminals, each first terminal being in fluid communication with one of the first output openings (23) and being formed for attaching a first connection line (53),
b) a second set of a plurality of second terminals, each second terminal being in fluid communication with one of the second output openings (24) and being formed for attaching a second connection line (54),
**characterised in that** the first output openings (23) have a larger cross-sectional area than the second output openings (24) .

12. Distributor device according to claim 11, **characterised by** one or more of the features of the distributor device of the device according to any of preceding claims 2-10.

13. Method for introducing solids-containing slurry into a layer of earth, comprising the steps of:
a) introducing a plurality of first slurry deposits from a corresponding plurality of first application openings (63) into a first layer level remote from the surface,
b) introducing a plurality of second slurry deposits from a corresponding plurality of second application openings (64) into a second layer level close to the surface,
c) supplying the solids-containing slurry to the first application openings (63) via a plurality of first connection lines (53), each first connection line (53) being connected at the start thereof to an associated first outlet opening (23) of a corresponding plurality of first outlet openings (23) and at the end thereof to one of the first application openings (63),
d) supplying the solids-containing slurry to the second application openings (64) via a plurality of second connection lines (54), each second connection line (54) being connected at the start thereof to an associated one of the second outlet openings (24) of a corresponding plurality of second outlet openings (24) and at the end thereof to an associated one of the second application openings (64), the first outlet openings (23) having a greater cross-sectional area than the second outlet openings (24),
e) passing the solids-containing slurry into a distributor interior (122), and
f) distributing the solids-containing slurry from the distributor interior (122) to the first and second outlet openings (23, 24).

14. Method according to claim 13,
**characterised in that** the solids-containing slurry is passed from the inlet opening to the first and second outlet openings via a distributor device and connection lines attached thereto and an introduction device according to any of preceding claims 1-10.

## Revendications

1. Dispositif servant à introduire un dépôt de lisier contenant des matières solides dans une couche de terre, comprenant
a) un dispositif d'introduction avec un jeu de premières ouvertures de déversement (63a) et un jeu de deuxièmes ouvertures de déversement (64a), qui sont espacées de manière verticale, dans la position de travail du dispositif d'introduction, des premières ouvertures de déversement,
b) un dispositif distributeur (20) comprenant
- un espace intérieur de distributeur (122),
- une ouverture d'entrée (21) débouchant dans l'espace intérieur de distributeur (122) servant à amener du lisier contenant des matières solides,
- un premier jeu de plusieurs premières ouvertures de sortie (23) servant à évacuer le lisier contenant des matières solides hors de l'espace intérieur de distributeur (122),
et
- un deuxième jeu de plusieurs deuxièmes ouvertures de sortie (24) servant à évacuer le lisier contenant des matières solides hors de l'espace intérieur de distributeur (122),
c) un premier jeu de plusieurs premiers conduits de liaison (53), dans lequel chaque premier conduit de liaison (53) s'étend depuis un début de conduit vers une extrémité de conduit, est relié au niveau de son début de conduit à une première ouverture de sortie (23) et est relié au niveau de son extrémité de conduit à une première ouverture de déversement (63) parmi le jeu de premières ouvertures de déversement (63),
d) un deuxième jeu de plusieurs deuxièmes conduits de liaison (54), dans lequel chaque deuxième conduit de liaison (54) s'étend depuis un début de conduit vers une extrémité de conduit, est relié au niveau de son début de conduit à une deuxième ouverture de sortie (24) et est relié au niveau de son extrémité de conduit à une deuxième ouverture de déversement (64) parmi le jeu de deuxièmes ouvertures de déversement (64) ;
**caractérisé en ce que** les premières ouvertures de sortie (23) ont une dimension de section transversale plus grande que les deuxièmes ouvertures de sortie (24).

2. Dispositif selon la revendication 1,
**caractérisé par** un troisième jeu de plusieurs troisièmes ouvertures de sortie servant à évacuer le lisier contenant des matières solides hors de l'espace de distributeur (122) et un troisième jeu de plusieurs troisièmes conduits de liaison, dans lequel chaque troisième conduit de liaison s'étend depuis un début de conduit vers une extrémité de conduit, est relié au niveau de son début de conduit à une troisième ouverture de sortie et est relié au niveau de son extrémité de conduit à une première ouverture de déversement (63).

3. Dispositif selon la revendication précédente,
**caractérisé en ce que**
- les premières et troisièmes ouvertures de sortie ont une dimension de section transversale différente les unes des autres,
ou que
- les premières et troisièmes ouvertures de sortie ont une dimension de section transversale concordante.

4. Dispositif selon l'une quelconque des revendications précédentes,
**caractérisé en ce qu'**est disposé dans l'espace intérieur de distributeur (122) un dispositif de découpage, qui est relativement mobile par rapport aux premières et deuxièmes ouvertures de sortie (23, 24),
dans lequel de préférence le dispositif de découpage présente une arête de découpage et est guidé de manière mobile de telle manière qu'il balaye par-dessus le bord d'au moins un nombre des premières et/ou deuxièmes et/ou éventuellement troisièmes ouvertures.

5. Dispositif selon la revendication 4,
**caractérisé en ce que** le dispositif de découpage balaye par-dessus le bord de toutes ou de certaines de toutes les premières, deuxièmes et/ou troisièmes ouvertures.

6. Dispositif selon la revendication 4 ou 5,
**caractérisé en ce que** le dispositif de découpage présente plusieurs arêtes de découpage, dont respectivement chacune balaye sur au moins un nombre de premières, deuxièmes et/ou éventuellement troisièmes ouvertures.

7. Dispositif selon l'une quelconque des revendications précédentes 4 à 6,
**caractérisé en ce que** le dispositif de découpage est monté de manière à pouvoir tourner autour d'un axe de rotation et est amené au moyen d'un système d'entraînement à effectuer un déplacement de rotation ou de pivotement.

8. Dispositif selon la revendication 6,
**caractérisé en ce que** les premières, deuxièmes et éventuellement troisièmes ouvertures sont réalisées dans une plaque de découpage (120) plane.

9. Dispositif selon l'une quelconque des revendications précédentes,
**caractérisé en ce que** la section transversale de passage d'un trajet de guidage de fluide ne se rétrécit pas en partant d'une ouverture de sortie jusqu'à une ouverture de déversement.

10. Dispositif selon l'une quelconque des revendications précédentes,
**caractérisé en ce que** la première et la deuxième ouverture de déversement sont disposées au niveau d'une dent de cultivateur (61) réalisée de manière creuse, qui présente un espace creux situé à l'intérieur, dans lequel le deuxième et éventuellement le troisième conduit de liaison débouche et avec lequel la deuxième ouverture de déversement est en communication fluidique.

11. Dispositif distributeur servant à distribuer du lisier contenant des matières solides à une multitude d'ouvertures de déversement, comprenant
- un espace intérieur de distributeur (122),
- une ouverture d'entrée (21) débouchant dans l'espace intérieur de distributeur (122) servant à l'amenée de lisier contenant des matières solides,
- un premier jeu de plusieurs premières ouvertures de sortie (23) servant à évacuer le lisier contenant des matières solides hors de l'espace intérieur de distributeur (122), et
- un deuxième jeu de plusieurs deuxièmes ouvertures de sortie (24) servant à évacuer le lisier contenant des matières solides hors de l'espace intérieur de distributeur (122),
a) un premier jeu de plusieurs premiers raccords, dans lequel chaque premier raccord est en communication fluidique avec une des premières ouvertures de sortie (23) et est réalisé aux fins du raccord d'un premier conduit de liaison (53)
b) un deuxième jeu de plusieurs deuxièmes raccords, dans lequel chaque deuxième raccord est en communication fluidique avec une des deuxièmes ouvertures de sortie (24) et est réalisé aux fins du raccord d'un deuxième conduit de liaison (54),
**caractérisé en ce que** les premières ouvertures de sortie (23) ont une dimension de section transversale plus grande que les deuxièmes ouvertures de sortie (24).

12. Dispositif distributeur selon la revendication 11, **caractérisé par** une ou plusieurs des caractéristiques du dispositif distributeur du dispositif selon l'une quelconque des revendications 2 à 10.

13. Procédé servant à introduire du lisier contenant des matières solides dans une couche de terre, avec les étapes :
a) d'introduction d'une multitude de premiers dépôts de lisier provenant d'une multitude correspondante de premières ouvertures de déversement (63) dans un premier plan de couche éloigné de la surface,
b) d'introduction d'une multitude de deuxièmes dépôts de lisier provenant d'une multitude correspondante de deuxièmes ouvertures de déversement (64) dans un deuxième plan de surface proche de la surface,
c) d'amenée du lisier contenant des matières solides vers les premières ouvertures de déversement (63) par l'intermédiaire d'une multitude de premiers conduits de liaison (53), dans lequel chaque premier conduit de liaison (53) est relié au niveau de son début à respectivement une première ouverture de sortie (23) d'une multitude correspondante de premières ouvertures de sortie (23) et au niveau de son extrémité à une des premières ouvertures de déversement (63),
d) d'amenée du lisier contenant des matières solides aux deuxièmes ouvertures de distribution (64) par l'intermédiaire d'une multitude de deuxièmes conduits de liaison (54), dans lequel chaque deuxième conduit de liaison (54) est relié au niveau de son début à respectivement une des deuxièmes ouvertures de sortie (24) d'une multitude correspondante de deuxièmes ouvertures de sortie (24) et au niveau de son extrémité à respectivement une des deuxièmes ouvertures de déversement (64), dans lequel les premières ouvertures de sortie (23) ont une dimension de section transversale plus grande que les deuxièmes ouvertures de sortie (24),
e) d'introduction du lisier contenant des matières solides dans un espace intérieur de distributeur (122), et
f) de distribution du lisier contenant des matières solides provenant de l'espace intérieur de distributeur (122) aux premières et deuxièmes ouvertures de sortie (23, 24).

14. Procédé selon la revendication 13,
**caractérisé en ce que** le lisier contenant des matières solides est acheminé en partant de l'ouverture d'entrée par l'intermédiaire d'un dispositif distributeur et de conduits de liaison raccordés à celui-ci et d'un dispositif d'introduction selon l'une quelconque des revendications 1 à 10 aux premières et deuxièmes ouvertures de sortie.
